Europäisches Patentamt

European Patent Office

Office européen des brevets

(19)

(11) EP 0 673 758 B1

(12) **FASCICULE DE BREVET EUROPEEN**

(45) Date de publication et mention
de la délivrance du brevet:
**17.05.2000 Bulletin 2000/20**

(51) Int Cl.[7]: **B32B 25/08**

(21) Numéro de dépôt: **95400340.6**

(22) Date de dépôt: **17.02.1995**

(54) **CONDITIONNEMENT DE MATIERE PLASTIQUE BI-COUCHE DOUX AU TOUCHER**

ZWEISCHICHTIGE KUNSTSTOFFVERPACKUNG MIT WEICHEM GRIFF

TWO-LAYERED PLASTIC PACKAGE WHICH IS SOFT TO THE TOUCH

(84) Etats contractants désignés:
**DE ES FR GB IT**

(30) Priorité: **21.03.1994 FR 9403264**

(43) Date de publication de la demande:
**27.09.1995 Bulletin 1995/39**

(73) Titulaire: **L'OREAL**
**75008 Paris (FR)**

(72) Inventeur: **Baduel, Jean-Louis**
**F-60260 Lamorlaye (FR)**

(74) Mandataire: **Peuscet, Jacques et al**
**SCP Cabinet Peuscet et Autres,**
**78, avenue Raymond Poincaré**
**75116 Paris (FR)**

(56) Documents cités:
**EP-A- 0 216 639**        **EP-A- 0 371 440**
**EP-A- 0 444 671**        **AU-A- 541 876**
**GB-A- 2 139 634**        **US-A- 4 929 479**

• **DATABASE WPI Week 9223, Derwent
Publications Ltd., London, GB; AN 92-187782 &
JP-A-4 119 822 (OKURA IND. CO. LTD.) 21 Avril
1992**
• **DATABASE WPI Week 8823, Derwent
Publications Ltd., London, GB; AN 88-159275 &
JP-A-63 022 828 (NAIGAI KASEI KK) 15 Mars
1988**

EP 0 673 758 B1

**Description**

La présente invention concerne un conditionnement en matériau plastique composite présentant un effet doux au toucher.

A l'heure actuelle, la majorité des conditionnements : tubes ou flacons, utilisés notamment en cosmétique, sont en matière plastique. On a pratiquement cessé d'utiliser, comme matière plastique, pour fabriquer les conditionnements, les chlorures de polyvinyle car ils sont considérés comme susceptibles de polluer l'environnement. On utilise donc généralement des polyoléfines, qui sont recyclables et ne sont pas polluantes. Les polyoléfines utilisées sont, de façon classique, le polyéthylène basse densité, plus particulièrement pour la fabrication des tubes, et le polyéthylène haute densité ou le polypropylène homopolymère, plus particulièrement pour la fabrication des flacons. Ces polyoléfines ont de bonnes propriétés d'imperméabilité aux gaz et à la vapeur d'eau et ont l'avantage d'être compatibles avec la plupart des produits chimiques. De façon générale, les conditionnements en polyoléfine sont préparés par extrusion, plus particulièrement par extrusion-soufflage dans un moule. Cependant, les conditionnements en polyoléfine obtenus ont un inconvénient, qui est particulièrement gênant en cosmétique : ils ont un toucher peu agréable ; en effet, ils présentent un toucher un peu gras et un peu collant, analogue à celui d'une cire ou d'une paraffine, et un aspect granuleux ou une certaine rugosité et, par conséquent, un coefficient de frottement élevé.

Pour remédier à cet inconvénient, on a essayé d'utiliser seuls des copolymères de propylène et d'éthylène élastomères, en particulier le copolymère de propylène et d'éthylène commercialisé sous la dénomination "ADFLEX" par la société "HIMONT". Ces copolymères de propylène et d'éthylène élastomères permettent d'obtenir, par extrusion-soufflage dans un moule, des tubes et des flacons présentant un toucher très doux et très agréable ; mais ces copolymères présentent une perméabilité à l'oxygène, qui est deux à trois fois plus élevée que celle des polyéthylènes et polypropylènes généralement utilisés pour la fabrication des tubes et flacons. Les produits conditionnés dans des tubes et flacons en copolymères de propylène et d'éthylène élastomères sont donc susceptibles d'être dégradés par oxydation au cours du stockage. De plus, ces copolymères de propylène et d'éthylène élastomères ont une mauvaise tenue de la paraison lorsqu'on les met en forme par extrusion.

Par ailleurs, il est connu de préparer des conditionnements à partir de matériaux plastiques composites comportant au moins deux couches de matières plastiques différentes. Par exemple, il est connu, par US-A 4 292 355 de préparer un récipient par thermoformage d'une feuille de matériau composite obtenue par coextrusion ; la feuille de matériau composite comprend au moins une couche de polypropylène et une couche externe d'un élastomère, à savoir un copolymère butadiène-styrène. Cependant, la couche externe de copolymère de butadiène et styrène ne confère pas au récipient un toucher agréable du fait de son coefficient de frottement élevé.

Selon la présente invention, on a trouvé qu'il est possible de préparer, notamment par coextrusion-soufflage dans un moule, des conditionnements dont la perméabilité à l'air et le toucher sont simultanément satisfaisants. Ces conditionnements sont constitués d'un matériau composite comportant deux couches simultanément et facilement coextrudables à température élevée. Ce matériau composite comprend une couche externe en un élastomère thermoplastique constituée par un copolymère de propylène et d'éthylène ayant une dureté Shore mesurée selon la norme ISO 868 inférieure ou égale à 40, et une couche interne constituée par une polyoléfine qui ne possède pas les caractéristiques d'un élastomère et qui est imperméable à l'oxygène.

Le choix du couple de constituants formant le matériau composite est tel qu'il permet d'obtenir un matériau dont les différentes couches ont une bonne tenue de la paraison et une bonne adhérence entre elles. On rappelle que la paraison est la quantité de matière unitaire qui sort de l'extrudeuse dans le but d'être moulée.

Le constituant de la couche externe est plus mou et plus flexible que celui de la couche interne, qui, quant à lui, est étanche à l'oxygène et présente une certaine tenue au conditionnement étant donné qu'il constitue son squelette. En effet, le constituant de la couche interne peut garantir la résistance mécanique du conditionnement, afin d'éviter son éclatement accidentel lors d'une pression mécanique trop forte et/ou d'une augmentation de température.

Le conditionnement ainsi formé peut satisfaire aux contraintes de fabrication industrielle, de stockage et d'utilisation. Il peut également être déformable élastiquement et ainsi revenir à sa forme initiale après qu'une pression s'y soit exercée.

La présente invention a donc pour objet un conditionnement, dont la paroi est constituée d'un matériau plastique composite formé de deux couches, caractérisé par le fait que :

   1) la couche externe de ladite paroi en élastomère thermoplastique est constituée par les copolymères de propylène et d'éthylène, statistiques et séquencés, ayant une dureté Shore D, mesurée selon la norme ISO 868, inférieure ou égale à 40 ;
   2) la couche interne de ladite paroi est constituée d'une polyoléfine qui n'a pas les caractéristiques d'un élastomère et qui est imperméable à l'oxygène ;
   3) les polymères, qui constituent les couches du matériau plastique composite, ont un poids moléculaire tel qu'ils soient susceptibles d'un formage par coextrusion-soufflage.

De préférence, la polyoléfine constituant la couche interne de la paroi est choisie dans le groupe formé par :

- les polyéthylènes, haute ou basse densité,
- les polypropylènes homopolymères,
- les copolymères de propylène et d'éthylène, statistiques et séquencés, ayant une dureté Shore D, mesurée selon la norme ISO 868, supérieure à 40.

Un élastomère est un plastomère qui présente trois caractéristiques spécifiques. D'une part, son module de rigidité doit être faible à température ambiante, d'autre part il peut supporter des déformations importantes sans rompre, et enfin il est résilient, c'est-à-dire qu'il retrouve sa géométrie initiale après avoir subi une contrainte.

Les copolymères de propylène et d'éthylène constituant la couche externe du matériau plastique composite ont, de préférence, un module de flexion selon la norme ISO 178 inférieur ou égal à 650 MPa et les copolymères de propylène et d'éthylène constituant la couche interne ont, de préférence, un module de flexion selon la norme ISO 178 supérieur à 650 MPa.

Parmi les élastomères thermoplastiques utilisables selon l'invention, on peut citer le copolymère de propylène et d'éthylène commercialisé sous la dénomination "ADFLEX" par la société "HIMONT".

Parmi les polyoléfines non élastomères utilisables pour constituer la couche interne du matériau plastique composite, on a cité le polyéthylène basse et haute densité : le polyéthylène basse densité est un polymère d'éthylène ayant un développement polymérique aléatoire et le polyéthylène haute densité est un polymère d'éthylène ayant une polymérisation orientée, la chaîne principale ayant de nombreuses petites ramifications.

Les conditionnements selon l'invention ont l'avantage que la couche externe d'élastomère apporte un toucher agréable et la couche interne de polyoléfine apporte l'étanchéité à l'oxygène. De plus, la plupart des élastomères constituant la couche externe sont relativement mous et flexibles et ne permettraient pas, à eux seuls, de fabriquer un conditionnement ayant une bonne résistance mécanique ; la polyoléfine de la couche interne permet de garantir une bonne résistance mécanique du conditionnement et, par conséquent, d'éviter l'éclatement accidentel du conditionnement lorsque des pressions mécaniques trop élevées s'exercent sur lui et/ou lorsque la température augmente. Le matériau composite reste déformable élastiquement, et peut, par conséquent, revenir à sa forme initiale après déformation. En outre, comme expliqué ci-dessus, les élastomères de la couche externe selon l'invention et les polyoléfines de la couche interne selon l'invention ont une bonne tenue de la paraison et sont facilement coextrudables à température élevée en donnant des couches ayant une bonne adhérence entre elles. Le conditionnement selon l'invention peut donc satisfaire aux contraintes de fabrication industrielle et de stockage ainsi qu'aux contraintes d'utilisation.

La paroi du conditionnement est formée par coextrusion-soufflage dans un moule. Ledit moule est, de préférence, choisi de façon que la surface externe du matériau plastique composite, lorsqu'elle a une dureté Shore D inférieure à 40, ait une rugosité telle que la moyenne Ra des écarts de rugosité soit comprise entre 0,2 μm et 1,5 μm, de préférence entre 0,4 μm et 1,5 μm et que le nombre Pc de pics par cm soit supérieur à 50.

En effet, les deux paramètres Ra et Pc sont les paramètres de rugosité permettant de définir l'état de surface de la couche externe. Ces paramètres dépendent à la fois de la nature de l'élastomère constituant la couche externe et de l'état de surface du moule utilisé pour l'extrusion-soufflage. Le premier paramètre Ra est la moyenne arithmétique des écarts de la surface réelle par rapport à la surface médiane ; cette moyenne arithmétique Ra est donnée par la formule

$$Ra = \frac{1}{lm} \int_0^{lm} |f(x)| \, dx$$

dans laquelle f(x) est la mesure de la distance de la surface réelle à la surface médiane en un point d'abscisse x sur une longueur lm, mesurée à l'aide d'un appareil "SURFTEST 301" commercialisé par la société "MITUTOYO".

Le second paramètre Pc est le nombre de pics par centimètre dépassant une bande centrée sur la surface moyenne de la surface réelle et ayant en ordonnée une épaiseur de $\pm 0,25$ μm. Pour mesurer ce paramètre, on peut utiliser également l'appareil "SURFTEST 301" commercialisé par la société "MITUTOYO".

Les valeurs numériques des paramètres Ra et Pc, pour des élastomères ayant une dureté Shore D inférieure à 40, ont été déterminées à partir de deux graphiques bidimensionnels, le premier représentant la dureté Shore D en fonction de la rugosité Ra et le second le nombre de pics en fonction de la rugosité Ra. On détermine sur ces graphiques les deux domaines pour lesquels on obtient un toucher très doux et satiné du type "peau de bébé".

Le matériau composite du conditionnement selon la présente invention a, avantageusement, une perméabilité à l'oxygène inférieure ou égale à 5 000 cm$^3$/m$^2$/24 heures pour une paroi de 25 μm d'épaisseur, à 45° C, avec une différence de pression de 10$^5$ Pascals. Cette perméabilité à l'oxygène est comparable à celle des polypropylènes homopolymères et des polyéthylènes généralement utilisés pour la fabrication de conditionnement qui, dans les mêmes conditions de mesure, est de 6 000 cm$^3$/m$^2$/24 heures pour le polyéthylène basse densité, de 3 600 cm$^3$/m$^2$/24heures pour un polypropylène homopolymère et de 2 800 cm$^3$/m$^2$/24 heures pour le polyéthylène haute densité. Elle est, en revanche, nettement inférieure à celle du copolymère d'éthylène et de propylène élastomère commercialisé sous la dénomination "ADFLEX" par la société "HIMONT" qui, dans les mêmes conditions de mesure, est de 11 000 cm$^3$/m$^2$/24 heures.

Selon l'invention, le polymère formant la couche interne et/ou celui formant la couche externe du matériau composite peut (ou peuvent) contenir une charge, colorée ou non, de façon à colorer ou rendre opaque le matériau composite.

L'épaisseur de la paroi du conditionnement selon l'invention est avantageusement comprise entre 750 et 1 450 µm ; les parois du conditionnement peuvent avoir une épaisseur uniforme ou une épaisseur variable.

De préférence, selon l'invention, l'épaisseur de la couche externe d'élastomère thermoplastique représente entre 10 et 30 % de l'épaisseur totale du matériau composite et la couche interne en polyoléfine non élastomère est comprise entre 70 et 90 % de l'épaisseur totale du matériau composite.

Les exemples donnés ci-après, à titre purement illustratif et non limitatif, permettront de mieux comprendre l'invention.

Dans ces exemples, on a fabriqué des flacons trapézoïdaux de 140 mm de hauteur, ayant une petite base de 60 mm et une grande base de 80 mm, munis d'un goulot de 19 mm de diamètre extérieur ; le goulot se raccorde à la paroi latérale du flacon par une forme ogivale. La fabrication a été effectuée par une technique de coextrusion-soufflage dans un moule classique.

Pour effectuer les différentes mesures sur la paroi de ces flacons, on a prélevé des échantillons de 1 x 1 cm sur la paroi latérale du flacon. Les mesures ont été effectuées comme décrit ci-dessus.

EXEMPLE 1

On a préparé un flacon, dont la paroi latérale a une épaisseur de 1 200 µm, par coextrusion-soufflage dans un moule d'un matériau composite formé d'une couche interne A et d'une couche externe B.

La couche A est constituée d'un copolymère statistique de propylène et d'éthylène commercialisé sous la dénomination "APPRYL 3020 GN 3" par la société "APPRYL" ; ce polymère a un module de flexion, mesuré selon la norme ISO 178, supérieur à 650 MPa et une dureté Shore D, mesurée selon la norme ISO 868, supérieure à 40. La couche A représente 76 % en poids du matériau composite total et a une épaisseur de 1 050 µm.

La couche B est constituée de 19 % en poids, par rapport au poids total du matériau composite, d'un copolymère d'éthylène et de propylène élastomère vendu sous la dénomination "ADFLEX" par la société "HIMONT" ayant une dureté Shore D de 36 et, comme charge, de 5 % en poids, par rapport au poids total du matériau composite, de TiO$_2$ pulvérulent. La couche B a une épaisseur de 150 µm.

On a mesuré les paramètres suivants :

- perméabilité à l'oxygène (ramenée à une épaisseur de 25 µm à 45° C sous une différence de pression de 10$^5$ Pa) : 3 500 cm$^3$/m$^2$/24 heures
- moyenne Ra des écarts de rugosité de la surface de la couche B : 0,65 µm
- nombre Pc de pics/cm sur la surface de la couche B : 80

Le toucher de ce flacon est doux et agréable.

EXEMPLE 2

On a opéré comme dans l'exemple 1, à cette différence près que l'état de surface du moule utilisé dans l'exemple 1 a été modifié par une technique de sablage.

On a obtenu un flacon ayant les mêmes caractéristiques que dans l'exemple 1, sauf que la moyenne Ra des écarts de rugosité de la surface de la couche B est de 1,09 µm et le nombre Pc de pics/cm de la surface de la couche B est de 54.

Ce flacon a un toucher doux et agréable.

EXEMPLE 3

On a préparé un flacon, dont la paroi a une épaisseur de 1 250 µm, par coextrusion-soufflage dans le même moule que dans l'exemple 1 d'un matériau composite formé d'une couche interne A1 et d'une couche externe B1.

La couche A1 est constituée d'un polypropylène homopolymère vendu sous la dénomination commerciale "3021 BN" par la société "APPRYL" ; elle représente 80 % en poids du matériau composite total et a une épaisseur de 1 000 µm.

La couche B1 est constituée d'un copolymère élastomère statistique de propylène et d'éthylène, vendu sous la dénomination commerciale "ADFLEX" par la société "HIMONT", qui a une dureté Shore D de 36 ; elle représente 20 % en poids du matériau composite total ; l'épaisseur de la couche B1 est de 250 µm.

On a mesuré les paramètres suivants :

- perméabilité à l'oxygène (ramenée à 25 µm d'épaisseur à 45° C, sous une différence de pression de 10$^5$ Pa) : 2 235 cm$^3$/m$^2$/24 heures
- moyenne Ra des écarts de rugosité de la surface de la couche B1 : 1,71 µm
- nombre Pc de pics/cm de la surface de la couche B1 : 55

Ce flacon a un toucher doux et agréable.

## Revendications

**1.** Conditionnement susceptible d'être obtenu par coextrusion-soufflage et dont la paroi est constituée de deux couches, caractérisé par le fait que :

> a) la couche externe est en un élastomère thermoplastique constitué par un copolymère d'éthylène et de propylène ayant une dureté Shore D, mesurée selon la norme ISO 868, inférieure ou égale à 40 ;
> b) la couche interne est constituée par une polyoléfine n'ayant pas les caractéristiques d'un élastomère qui est imperméable à l'oxygène ;

le poids moléculaire des polymères constituant les deux couches étant choisi de façon telle que le conditionnement soit susceptible d'être moulé par coextrusion-soufflage.

**2.** Conditionnement selon la revendication 1, caractérisé par le fait que la polyoléfine constituant la couche interne du matériau plastique composite est choisie dans le groupe formé par :

- les polyéthylènes, haute ou basse densité,
- les polypropylènes homopolymères,
- les copolymères de propylène et d'éthylène ayant une dureté Shore D, mesurée selon la norme ISO 868, supérieure à 40.

**3.** Conditionnement selon l'une des revendications 1 ou 2, caractérisé par le fait que les copolymères de propylène et d'éthylène constituant la couche externe du matériau plastique composite ont un module de flexion, mesuré selon la norme ISO 178, inférieur ou égal à 650 MPa.

**4.** Conditionnement selon la revendication 2, caractérisé par le fait que les copolymères de propylène et d'éthylène constituant la couche interne du matériau plastique composite ont un module de flexion, mesuré selon la norme ISO 178, supérieur à 650 MPa.

**5.** Conditionnement selon l'une des revendications 1 à 4, caractérisé par le fait que la couche interne est constituée d'une polyoléfine autre qu'un copolymère de propylène et d'éthylène, ladite polyoléfine ayant une dureté Shore D, mesurée selon la norme ISO 868, supérieure à 40.

**6.** Conditionnement selon l'une des revendications 1 à 5, caractérisé par le fait que la surface externe du matériau plastique composite a une rugosité telle que la moyenne Ra des écarts de rugosité soit comprise entre 0,2 μm et 1,5 μm et que le nombre Pc de pics par cm soit supérieur à 50.

**7.** Conditionnement selon la revendication 6, caractérisé par le fait que la moyenne Ra des écarts de rugosité est comprise entre 0,4 μm et 1,5 μm.

**8.** Conditionnement selon l'une des revendications 1 à 7, caractérisé par le fait que le matériau plastique composite a une perméabilité à l'oxygène inférieure à 5 000 cm$^3$/m$^2$/24 heures à 45° C ramenée à un échantillon de 25 μm d'épaisseur et sous une différence de pression de 10$^5$ Pascals.

**9.** Conditionnement selon l'une des revendications 1 à 8, caractérisé par le fait que l'épaisseur de la couche externe du matériau plastique composite représente 10 à 30 % de l'épaisseur totale du matériau plastique composite.

**10.** Conditionnement selon l'une des revendications 1 à 9, caractérisé par le fait que l'épaisseur de la couche interne du matériau plastique composite représente 70 à 90 % de l'épaisseur totale du matériau plastique composite.

## Claims

**1.** Packaging which can be obtained by coextrusion-blowing and whose wall consists of two layers, characterized in that:

> a) the outer layer is made of a thermoplastic elastomer consisting of a copolymer of ethylene and propylene which has a Shore D hardness, measured according to ISO standard 868, which is lower than or equal to 40;
> b) the inner layer consists of a polyolefin which does not have the characteristics of an elastomer and which is impervious to oxygen;

the molecular weight of the polymers of which the two layers consist being chosen such that the packaging can be moulded by coextrusion-blowing.

**2.** Packaging according to Claim 1, characterized in that the polyolefin of which the inner layer of the composite plastic consists is chosen from the group made up of:

- high- or low-density polyethylenes,
- polypropylene homopolymers,
- copolymers of propylene and ethylene which have a Shore D hardness, measured according to ISO standard 868, higher than 40.

**3.** Packaging according to either of Claims 1 and 2, characterized in that the copolymers of propylene and ethylene forming the outer layer of the composite plastic have a flexural modulus, measured according to ISO standard 178, lower than or equal to 650 MPa.

4. Packaging according to Claim 2, characterized in that the copolymers of propylene and ethylene forming the inner layer of the composite plastic have a flexural modulus, measured according to ISO standard 178, higher than 650 MPa.

5. Packaging according to one of Claims 1 to 4, characterized in that the inner layer consists of a polyolefin other than a copolymer of propylene and ethylene, the said polyolefin having a Shore D hardness, measured according to ISO standard 868, higher than 40.

6. Packaging according to one of Claims 1 to 5, characterized in that the outer surface of the composite plastic has a roughness such that the average Ra of the variations in roughness is between 0.2 $\mu$m and 1.5 $\mu$m and that the number Pc of peaks per cm is higher than 50.

7. Packaging according to Claim 6, characterized in that the average Ra of the variations in roughness is between 0.4 $\mu$m and 1.5 $\mu$m.

8. Packaging according to one of Claims 1 to 7, characterized in that the composite plastic has a permeability to oxygen lower than 5 000 cm$^3$/m$^2$/24 hours at 45°C in the case of a sample of 25 $\mu$m thickness and at a pressure difference of 10$^5$ pascals.

9. Packaging according to one of Claims 1 to 8, characterized in that the thickness of the outer layer of the composite plastic represents 10 to 30 % of the total thickness of the composite plastic.

10. Packaging according to one of Claims 1 to 9, characterized in that the thickness of the inner layer of the composite plastic represents 70 to 90 % of the total thickness of the composite plastic.

**Patentansprüche**

1. Durch Koextrusionsblasen herstellbare Verpakkung, deren Wand aus zwei Schichten besteht, dadurch gekennzeichnet, daß

a) die Außenschicht aus einem thermoplastischen Elastomer besteht, das aus einem Ethylen-Propylen-Copolymer mit einer gemäß der ISO-Norm 868 gemessenen Shorehärte D von weniger als oder gleich 40 besteht,
b) die Innenschicht aus einem Polyolefin besteht, das nicht die Merkmale eines Elastomers besitzt und das sauerstoffundurchlässig ist,

wobei das Molekulargewicht der die beiden Schichten bildenden Polymere so gewählt ist, daß die Verpackung durch Koextrusionsblasen geformt werden kann.

2. Verpackung nach Anspruch 1, dadurch gekennzeichnet, daß das die Innenschicht des Kunststoffverbundmaterials bildende Polyolefin aus der aus den folgenden Stoffen bestehenden Gruppe ausgewählt ist:

- Polyethylene hoher oder niedriger Dichte,
- homopolymere Polypropylene,
- Propylen-Ethylen-Copolymere mit einer gemäß der ISO-Norm 868 gemessenen Shorehärte D von über 40.

3. Verpackung nach einem der Ansprüche 1 oder 2, dadurch gekennzeichnet, daß die die Außenschicht des Kunststoffverbundmaterials bildenden Propylen-Ethylen-Copolymere einen gemäß der ISO-Norm 178 gemessenen Biegemodul von weniger als oder gleich 650 MPa besitzen.

4. Verpackung nach Anspruch 2, dadurch gekennzeichnet, daß die die Innenschicht des Kunststoffverbundmaterials bildenden Propylen-Ethylen-Copolymere einen gemäß der ISO-Norm 178 gemessenen Biegemodul von über 650 MPa besitzen.

5. Verpackung nach einem der Ansprüche 1 bis 4, dadurch gekennzeichnet, daß die Innenschicht aus einem anderen Polyolefin als einem Propylen-Ethylen-Copolymer besteht, wobei dieses Polyolefin eine gemäß der ISO-Norm 868 gemessene Shorehärte D von über 40 besitzt.

6. Verpackung nach einem der Ansprüche 1 bis 5, dadurch gekennzeichnet, daß die äußere Oberfläche des Kunststoffverbundmaterials eine solche Rauheit besitzt, daß der Mittelwert Ra der Rauheitsabweichungen zwischen 0,2 $\mu$m und 1,5 $\mu$m beträgt und daß die Anzahl Pc von Spitzen pro cm über 50 beträgt.

7. Verpackung nach Anspruch 6, dadurch gekennzeichnet, daß der Mittelwert Ra der Rauheitsabweichungen zwischen 0,4 $\mu$m und 1,5 $\mu$m beträgt.

8. Verpackung nach einem der Ansprüche 1 bis 7, dadurch gekennzeichnet, daß das Kunststoffverbundmaterial bei einer Probe mit einer Dicke von 25 $\mu$m eine Sauerstoffdurchlässigkeit von weniger als 5000 cm$^3$/m$^2$/24h bei 45°C und unter einer Druckdifferenz von 10$^5$ Pascal besitzt.

9. Verpackung nach einem der Ansprüche 1 bis 8, dadurch gekennzeichnet, daß die Dicke der Außenschicht des Kunststoffverbundmaterials 10 bis 30% der Gesamtdicke des Kunststoffverbundmaterials darstellt.

10. Verpackung nach einem der Ansprüche 1 bis 9, dadurch gekennzeichnet, daß die Dicke der Innenschicht des Kunststoffverbundmaterials 70 bis 90 % der Gesamtdicke des Kunststoffverbundmaterials darstellt.